(19) Europäisches Patentamt
European Patent Office
Office européen des brevets

(11) **EP 3 282 570 A1**

(12) **EUROPEAN PATENT APPLICATION**

(43) Date of publication:
**14.02.2018 Bulletin 2018/07**

(51) Int Cl.:
**H02M 3/07** *(2006.01)*    **H02M 3/158** *(2006.01)*
**H02M 1/00** *(2006.01)*

(21) Application number: **17184166.1**

(22) Date of filing: **01.08.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **03.08.2016 US 201615227116**

(71) Applicant: **Schneider Electric IT Corporation
West Kingston, RI 02892 (US)**

(72) Inventors:
• **Chen, Hui-Jung
11652 Taipei City (TW)**
• **Chiang, Hsuang-Chang
235 New Taipei City (TW)**

(74) Representative: **Murgitroyd & Company
Scotland House
165-169 Scotland Street
Glasgow G5 8PL (GB)**

(54) **HIGH STEP DOWN DC/DC CONVERTER**

(57)    According to one aspect, embodiments herein provide a DC-DC converter system comprising a plurality of switches configured to receive input DC power having a DC voltage level from a DC voltage source, a first capacitor coupled to the plurality of switches, a second capacitor coupled to the plurality of switches, and a controller configured to operate the plurality of switches such that in a first mode, voltage across the first capacitor is at a level equal to substantially half of the DC voltage level of the input DC power, in a second mode, voltage across the second capacitor is at a level equal to substantially half of the DC voltage level of the input DC power, and an output voltage level of DC power at an output is stepped down, by a voltage step down ratio, in relation to the DC voltage level of the input DC power.

FIG. 1

**Description**

BACKGROUND OF THE INVENTION

1. Field of Invention

The present invention relates generally to DC-DC converters.

2. Discussion of Related Art

DC-DC converters are commonly used in a variety of applications to convert input DC power at a first voltage level to output DC power at a second voltage level. Such DC-DC converters can step-up voltage (i.e., boost voltage), step-down voltage (i.e., buck voltage), and/or provide isolation between the input and output power.

SUMMARY

At least one aspect of the invention is directed to a DC-DC converter system comprising a positive input configured to be coupled to a positive terminal of a DC voltage source, a negative input configured to be coupled to a negative terminal of the DC voltage source, an output configured to be coupled to a load and to provide output DC power to the load, a plurality of switches coupled to the positive input and the negative input and configured to receive input DC power having a DC voltage level from the DC voltage source, a first capacitor coupled to the plurality of switches and the output, a second capacitor coupled to the plurality of switches and the output, and a controller coupled to the plurality of switches and configured to operate the plurality of switches such that in a first mode of operation of the DC-DC converter system, voltage across the first capacitor is at a level equal to substantially half of the DC voltage level of the input DC power, in a second mode of operation of the DC-DC converter system, voltage across the second capacitor is at a level equal to substantially half of the DC voltage level of the input DC power, and an output voltage level of the output DC power is stepped down, by a voltage step down ratio, in relation to the DC voltage level of the input DC power.
According to one embodiment, the DC-DC converter system further comprises a first inductor coupled between the plurality of switches and the output, and a second inductor coupled between the first capacitor and the output. In one embodiment, the plurality of switches includes a first switch coupled between the positive input and the first capacitor, a second switch coupled between the second capacitor and the output, and a third switch coupled between the first inductor and the output. In another embodiment, in the first mode of operation the controller is further configured to provide control signals to the first switch to close the first switch, thereby coupling the positive input to the first capacitor, provide control signals to the second switch to close the second switch, thereby coupling the output to the second capacitor, and provide control signals to the third switch to close the third switch, thereby coupling the output to the first inductor.
According to another embodiment, the plurality of switches further includes a fourth switch coupled between the negative input and the second capacitor, a fifth switch coupled between the first capacitor and the first inductor, and a sixth switch coupled between the second inductor and the output. In one embodiment, in the second mode of operation the controller is further configured to provide control signals to the fourth switch to close the fourth switch, thereby coupling the negative input to the second capacitor, provide control signals to the fifth switch to close the fifth switch, thereby coupling the second capacitor to the output via the first inductor, and provide control signals to the sixth switch to close the sixth switch, thereby coupling the output to the second inductor.
According to one embodiment, in a third mode of operation of the DC-DC converter system, the controller is further configured to provide control signals to the third switch to close the third switch, thereby coupling the output to the first inductor, and provide control signals to the sixth switch to close the sixth switch, thereby coupling the output to the second inductor, wherein the controller is further configured to operate the DC-DC converter system in the third mode of operation when the DC-DC converter system is transitioning between the first and second modes of operation. In one embodiment, a positive terminal of the first capacitor is coupled to the first switch and a negative terminal of the first capacitor is coupled to the second inductor. In another embodiment, a positive terminal of the second capacitor is coupled to the negative terminal of the first capacitor and a negative terminal of the second capacitor is coupled to the fourth switch.
Another aspect of the invention is directed to a method for operating a DC-DC converter system, the method comprising receiving, with a plurality of switches, input DC power having a DC voltage level, from a DC voltage source, operating, with a controller coupled to the plurality of switches, the plurality of switches in a first mode of operation such that voltage across a first capacitor coupled to the plurality of switches is at a level equal to substantially half of the DC voltage level of the input DC power, operating, with the controller, the plurality of switches in a second mode of operation such that voltage across a second capacitor coupled to the plurality of switches is at a level equal to substantially half of the DC voltage level of the input DC power, providing, output DC power having an output voltage level, to a load coupled to the plurality of switches, and operating, with the controller, the plurality of switches such that the output voltage level of the output DC power is stepped down, by a voltage step down ratio, in relation to the DC voltage level of the input DC power.

According to one embodiment, the DC-DC converter system includes a positive input configured to be coupled to a positive terminal of the DC voltage source, a negative input configured to be coupled to a negative terminal of the DC voltage source, an output configured to be coupled to a load and to provide output DC power to the load, a first inductor coupled between the plurality of switches and the output, and a second inductor coupled between the first capacitor and the output, and operating the plurality of switches in the first mode of operation includes coupling the positive input to the output via a first power path including the first capacitor and the second inductor, coupling the second capacitor to the output via a second power path including the second inductor, and coupling the first inductor to the output via a third power path.

According to another embodiment, operating the plurality of switches in the second mode of operation includes coupling the negative input to the output via a fourth power path including the second capacitor and the first inductor, coupling the first capacitor to the output via a fifth power path including the first inductor, and coupling the second inductor to the output via a sixth power path. In one embodiment, the method further comprises alternating operation of the plurality of switches in the first mode of operation and the second mode of operation. In another embodiment, the method further comprises operating the plurality of switches in a third mode of operation when operation of the plurality of switches is transitioning between the first and second modes of operation. In one embodiment, operating the plurality of switches in the third mode of operation includes coupling the first inductor to the output via the third power path, and coupling the second inductor to the output via the sixth power path.

According to one embodiment, receiving the input DC power from the DC voltage source includes receiving the input DC power from a front end Power Factor Correction (PFC) pre-regulator that utilizes simple diode rectifiers to generate the input DC power.

At least one aspect of the invention is directed to a DC-DC converter system comprising a positive input configured to be coupled to a positive terminal of a DC voltage source, a negative input configured to be coupled to a negative terminal of the DC voltage source, an output configured to be coupled to a load and to provide output DC power to the load, and means for receiving DC input power having a DC voltage level from the DC voltage source, splitting the DC input power into two voltage sources, each of the two voltage sources having a voltage level equal to substantially half of the DC voltage level of the DC input power, and for stepping down, by a voltage step down ratio, the DC voltage level of the input DC power to a stepped down voltage level at the output.

According to one embodiment, the means for splitting the DC input power into two voltage sources includes means for generating, in a first mode of operation, a first voltage source having a level equal to substantially half of the DC voltage level of the DC input power. In another embodiment, the means for splitting the DC input power into two voltage sources further includes means for generating, in a second mode of operation, a second voltage source having a level equal to substantially half of the DC voltage level of the DC input power.

According to another embodiment, the means for stepping down the DC voltage level of the input DC power includes means for generating, in the first mode of operation, a first plurality of power paths in the DC-DC converter system to step down, by the voltage step down ratio, the DC voltage level of the input DC power to the stepped down voltage level. In one embodiment, the means for stepping down the DC voltage level of the input DC power further includes means for generating, in the second mode of operation, a second plurality of power paths in the DC-DC converter system to step down, by the voltage step down ratio, the DC voltage level of the input DC power to the stepped down voltage level.

BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:

FIG. 1 is a circuit diagram of a DC-DC converter system according to aspects described herein;

FIG. 2 is a timing diagram illustrating operation of a DC-DC converter system during different modes of operation according to aspects described herein;

FIG. 3 is a circuit diagram illustrating operation of a DC-DC converter in a first mode of operation according to aspects described herein;

FIG. 4 is a circuit diagram illustrating operation of DC-DC converter in a second mode of operation according to aspects described herein; and

FIG. 5 is a circuit diagram illustrating operation of a DC-DC converter in a third mode of operation according to aspects described herein.

DETAILED DESCRIPTION OF THE INVENTION

Examples of the methods and systems discussed herein are not limited in application to the details of construction and the arrangement of components set forth in the following description or illustrated in the accompanying drawings. The methods and systems are capable of embodiment in other embodiments and of being practiced or of being carried out in various ways. Examples of specific embodiments are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms. In addition, in the event of inconsistent usages of terms between this document and documents incorporated herein by reference, the term usage in the incorporated references is supplementary to that of this document; for irreconcilable inconsistencies, the term usage in this document controls.

As discussed above, DC-DC converters are commonly used in a variety of applications to convert input DC power at a first voltage level to output DC power at a second voltage level. For example, common rectifiers utilized in telecommunications systems or in server power supplies employ a front end Power Factor Correction (PFC) pre-regulator that outputs HVDC (e.g., 380Vdc or above) and an LLC resonant converter with synchronous rectification to generate low voltage outputs (e.g., 48V or 12V). The synchronous rectification provided by the LLC resonant converter may allow for high efficiency and power density requirements. However, such LLC resonant converters are typically complex and require both hardware and firmware solutions to account for phase shifts in the sinusoidal current through the synchronous rectifier attributable to changing load requirements and changing input voltage.

A non-isolated high step-down DC-DC converter system is provided herein that provides high efficiency and high power density. In addition, as the DC-DC converter system described herein has a relatively high voltage transfer ratio, it is suitable to receive an input dc voltage source from a front end PFC pre-regulator that utilizes simple diode rectifiers rather than synchronous rectifiers.

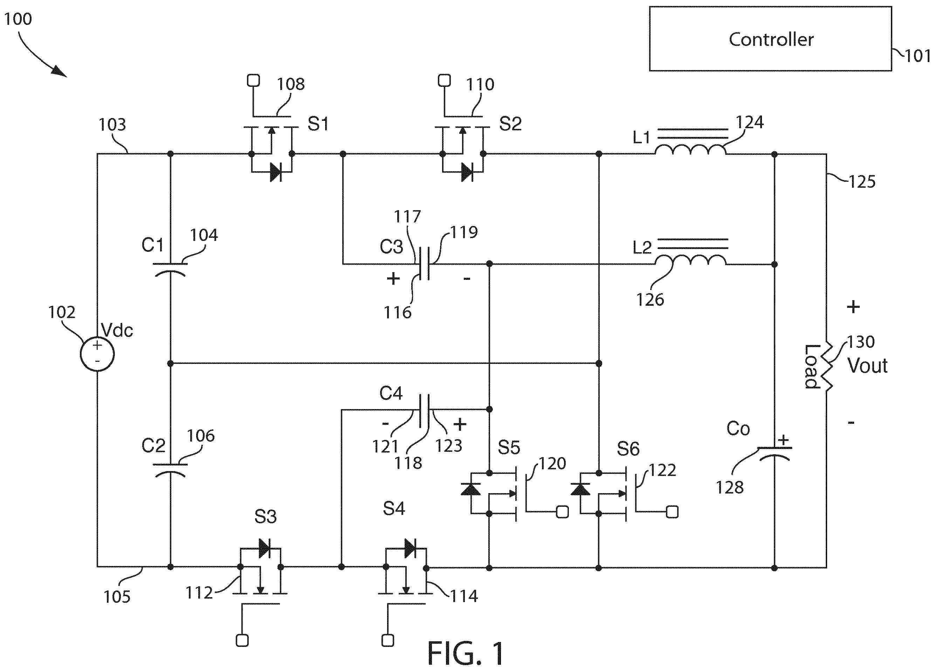

FIG. 1 is a circuit diagram of a DC-DC converter system 100 according to aspects described herein. The system 100 includes a positive input 103, a negative input 105, capacitor C1 104, capacitor C2 106, switch S1 108, switch S2 110, switch S3 112, switch S4 114, capacitor C3 116, capacitor C4 118, switch S5 120, switch S6 122, inductor L1 124, inductor L2 126, capacitor Co 128, and output 125. According to one embodiment, the switches S1-S6 are Metal-Oxide-Semiconductor Field-Effect Transistors (MOSFET); however, in other embodiments, any one of the switches S1-S6 can be a different type of transistor or switch.

The positive input 103 is configured to be coupled to a positive terminal of a DC voltage source 102 and the negative input 105 is configured to be coupled to a negative terminal of the DC voltage source 102. A first terminal of capacitor C1 104 is coupled to the positive input 103 and a first terminal of capacitor C2 106 is configured to be coupled to the negative input 105. According to one embodiment, the DC source 102 is provided by a rectifier (e.g., a rectifier of a PFC pre-regulator); however, in other embodiments, the DC source 102 can be provided by another appropriate system. A second terminal of the capacitor C1 104 is coupled to a second terminal of the capacitor C2 106. The source of switch S1 108 is coupled to the positive input 103 and the source of switch S3 112 is coupled to the negative input 105.

The drain of switch S1 108 is coupled to the source of switch S2 110. The drain of switch S2 110 is coupled to a first terminal of the inductor L1 124. A second terminal of the inductor L1 124 is coupled to a positive terminal of capacitor Co 128. The second terminal of the inductor L1 124 is also configured to be coupled to a load 130 via the output 125. The drain of switch S3 112 is coupled to the source of switch S4 114. The drain of switch S4 114 is coupled to the source of switch S5 120, the source of switch S6 122, and a negative terminal of capacitor Co 128. The drain of switch S4 114 is also configured to be coupled to the load 130. A positive terminal 117 of capacitor C3 116 is coupled to the drain of switch S1 108. A negative terminal 119 of capacitor C3 116 is coupled to a first terminal of inductor L2 126. A second terminal of inductor L2 126 is coupled to the positive terminal of capacitor Co 128.

A negative terminal 121 of capacitor C4 118 is coupled to the drain of switch S3 112. A positive terminal 123 of capacitor C4 118 is coupled to the drain of switch S5 120. The drain of switch S5 120 is also coupled to the negative terminal 119 of capacitor C3 116. The drain of switch S6 122 is coupled to the drain of switch S2 110, to the second terminal of capacitor C1 104, and to the second terminal of capacitor C2 106. The gate of each switch S1-S6 is coupled to a controller 101 and configured to receive control signals from the controller 101.

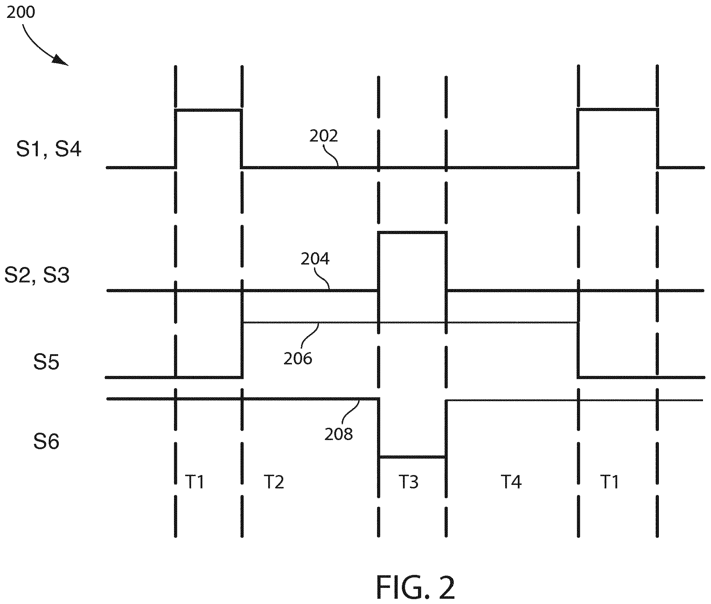

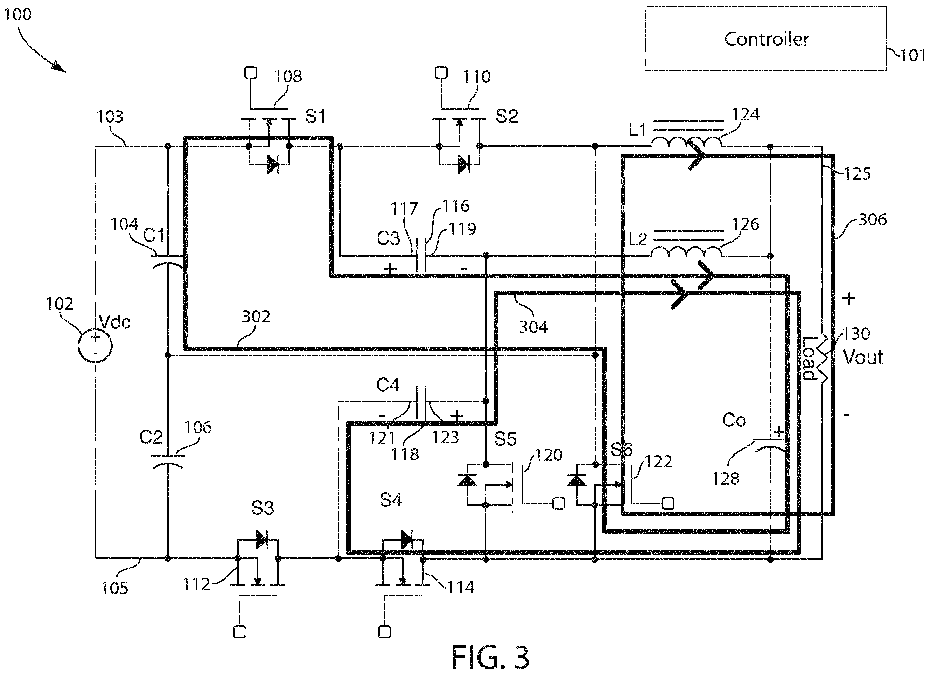

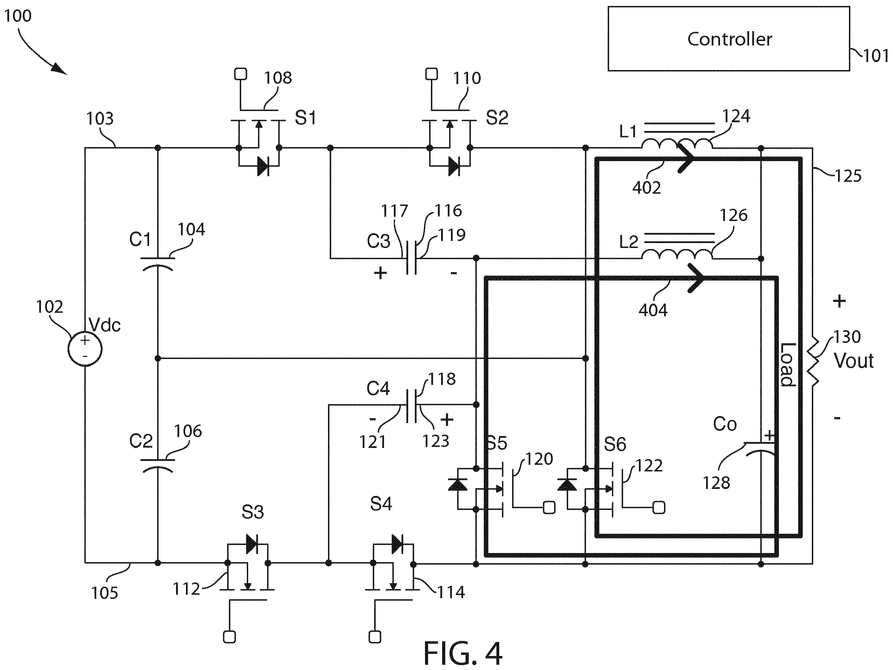

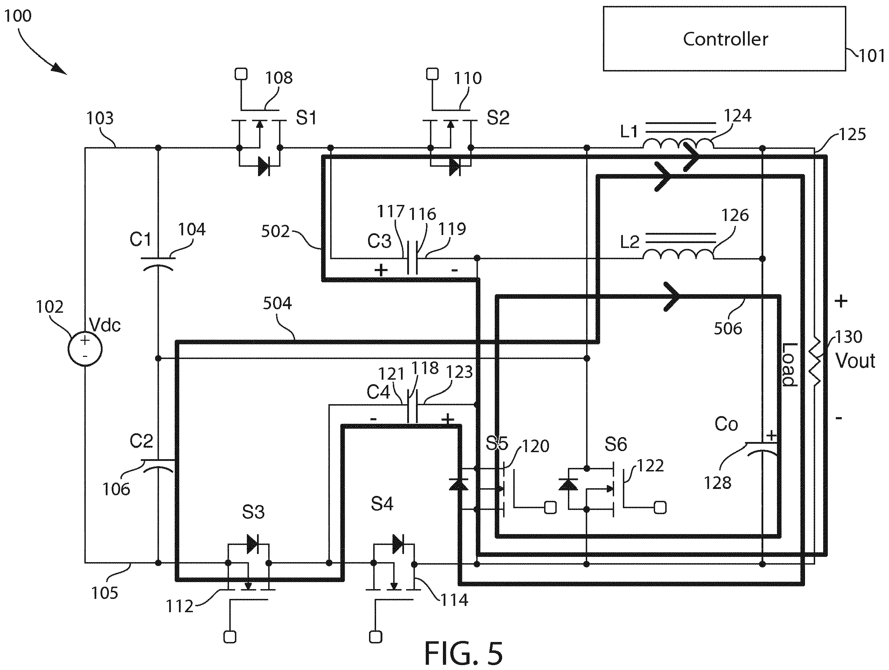

Operation of the converter system 100 is described below with respect to FIGS. 2-5. FIG. 2 is a timing diagram illustrating operation of the converter during different modes of operation (T1-T4). FIG. 2 includes a first trace 202 illustrating control signals provided by the controller 101 to the gates of switches S1 108 and S4 114 during the different modes of operation (T1-T4), a second trace 204 illustrating control signals provided by the controller 101 to the gates of switches S2 110 and S3 112 during the different modes of operation (T1-T4), a third trace 206 illustrating control signals provided by the controller 101 to the gate of switch S5 120 during the different modes of operation (T1-T4), and a fourth trace 208 illustrating control signals provided by the controller 101 to the gate of switch S6 122 during the different modes of operation (T1-T4). FIG. 3 is a circuit diagram illustrating operation of the converter in a first mode of operation (T1). FIG. 4 is a circuit diagram illustrating operation of the converter in a second mode of operation (T2) and a fourth mode of operation (T4). FIG. 5 is a circuit diagram illustrating operation of the converter in a third mode of operation (T3).

As shown in FIGS. 2-3, during the first mode of operation (T1), the controller 101 sends a high control signal 202 to the gates of switch S1 108 and switch S4 114 to close switch S1 108 and switch S4 14, a low control signal 204 to the gates of switch S2 110 and switch S3 112 to maintain switch S2 110 and switch S3 112 in an open state, a low control signal 206 to the gate of switch S5 120 to maintain switch S5 120 in an open state, and a high control signal 208 to the gate of switch S6 122 to close switch S6 122.

In the first mode of operation (T1), once switch S1 108, switch S4 114, and switch S6 122 are closed and the system 100 is receiving DC power having a DC voltage level (Vdc) from the DC voltage source 102 (e.g., from a PFC preregulator), the system 100 operates with multiple power paths to provide a stepped down DC voltage to the load 130. As shown in FIG. 3, a first power path 302 includes the capacitor C1 104, switch S1 108, capacitor C3 116, inductor L2 126, capacitor Co 128, and switch S6 122; a second power path 304 includes capacitor C4 118, inductor L2 126, capacitor Co 128, and switch S4 114; and a third power path 306 includes inductor L1 124, load 130, and switch S6 122. In the first mode of operation (T1), the power paths 302-306 function such that the system 100 operates in accordance with the following equations:

$$Vc4 * D = Vo$$

(where Vc4 is the voltage across capacitor C4 118, D is a step-down ratio, and Vo is the output voltage at te output 125);

$$Vc1 = Vc3 + Vc4$$

(where Vc1 is the input voltage across capacitor C1 104 and Vc3 is the voltage across capacitor C3 116); and

$$Vc4 = 1/2\ Vc1.$$

As shown in FIGS. 2 and 4, during the second mode of operation (T2), the controller 101 sends a low control signal 202 to the gates of switch S1 108 and switch S4 114 to maintain switch S1 108 and switch S4 14 in an open state, a low control signal 204 to the gates of switch S2 110 and switch S3 112 to maintain switch S2 110 and switch S3 112 in an open state, a high control signal 206 to the gate of switch S5 120 to close switch S5 120, and a high control signal 208 to the gate of switch S6 122 to close switch S6 122. In the second mode of operation (T2), once switch S5 120 and S6 122 are closed, the system 100 operates with multiple power paths. As shown in FIG. 4, a first power path 402 includes the inductor L1 124, the load 130 and the switch S6 122; and a second power path 404 includes the inductor L2 124, the capacitor Co 128, and the switch S5 120.

As shown in FIGS. 2 and 5, during the third mode of operation (T3), the controller 101 sends a low control signal 202 to the gates of switch S1 108 and switch S4 114 to maintain switch S1 108 and switch S4 14 in an open state, a high control signal 204 to the gates of switch S2 110 and switch S3 112 to close switch S2 110 and switch S3 112, a high control signal 206 to the gate of switch S5 120 to close switch S5 120, and a low control signal 208 to the gate of switch S6 122 to maintain switch S6 122 in an open state.

In the third mode of operation (T3), once switch S2 110, switch S3 112, and switch S5 120 are closed and the system 100 is receiving DC power having the DC voltage level (Vdc) from the DC voltage source 102 (e.g., from a PFC preregulator), the system 100 operates with multiple power paths to provide a stepped down DC voltage to the load 130. As shown in FIG. 5, a first power path 502 includes capacitor C3 116, switch S2 110, inductor L1 124, load 130, and switch S5 120; a second power path 504 includes capacitor C2 106, inductor L1 124, load 130, switch S5 120, capacitor C4, 118, and switch S3 112; and a third power path 506 includes inductor L2 126, capacitor Co 128, and switch S5 120. In the third mode of operation (T3), the power paths 402-406 function such that the system 100 operates in accordance with the following equations:

$$Vc3 * D = Vo;$$

$$Vc2 = Vc3 + Vc4;$$

$$Vc3 = 1/2\ Vc;$$

and

$$Vc1 = Vc2 = 1/2\ Vdc.$$

As shown in FIGS. 2 and 4, during the fourth mode of operation (T4), the controller 101 sends a low control signal 202 to the gates of switch S1 108 and switch S4 114 to maintain switch S1 108 and switch S4 14 in an open state, a low control signal 204 to the gates of switch S2 110 and switch S3 112 to maintain switch S2 110 and switch S3 112 in an open state, a high control signal 206 to the gate of switch S5 120 to close switch S5 120, and a high control signal 208 to the gate of switch S6 122 to close switch S6 122. In the fourth mode of operation (T4), once switch S5 120 and S6 122 are closed, the system 100 operates with multiple power paths. As shown in FIG. 4, a first power path 402 includes the inductor L1 124, the load 130 and the switch S6 122; and a second power path 404 includes the inductor L2 124, the capacitor Co 128, and the switch S5 120. Operation of the system 100 in the fourth mode of operation (T4) is the same as the operation of the system 100 in the second mode of operation (T2). After the fourth mode of operation (T4), the system can transition back to the first mode of operation (T1).

By operating the system as described above (over modes of operation T1-T4), the DC voltage source 102 is effectively split into two 1/2 voltage sources (e.g., Vc1 = Vc2 = 1/2 Vdc) and the system 100 can operate with a relatively high voltage transfer ratio defined by the following:

$$Vo = 1/4\ Vdc * D\ (Vo\ is\ the\ voltage\ across\ the\ load\ 130).$$

In at least one embodiment, operation of the system 100 as described above results in a voltage transfer ratio that is at least two times larger than the voltage transfer ratio of a typical DC-DC converter. For example, in one embodiment, operation of the system 100 as described above results in a voltage transfer ratio of 0.5; however, in other embodiments, the system 100 can be operated to result in a voltage transfer ratio of another appropriate value.

In addition to a larger voltage transfer ratio, the system 100 described above achieves a relatively high voltage transfer ratio with fewer components than a typical DC-DC converter. For example, during operation of the system 100 as described above, the current waveforms through the system 100 are square waves with substantially unchanging phases. As such, the system 100 may not need to implement the same hardware and firmware solutions utilized by typical synchronous rectifiers to account for phase shifts in the current waveforms due to changing load requirements or input voltage (as discussed above).

A non-isolated high step-down DC-DC converter system is provided herein that is able to provide high efficiency and high power density. In addition, as the DC-DC converter system described herein has a relatively high voltage transfer ratio, it is suitable to receive an input dc voltage source from a front end PFC pre-regulator that utilizes simple diode rectifiers rather than synchronous rectifiers.

Having thus described several aspects of at least one embodiment of this invention, it is to be appreciated various alterations, modifications, and improvements will readily occur to those skilled in the art. Such alterations, modifications, and improvements are intended to be part of this disclosure, and are intended to be within the spirit and scope of the invention. Accordingly, the foregoing description and drawings are by way of example only.

**Claims**

1. A DC-DC converter system comprising:

   a positive input configured to be coupled to a positive terminal of a DC voltage source;
   a negative input configured to be coupled to a negative terminal of the DC voltage source;
   an output configured to be coupled to a load and to provide output DC power to the load;
   a plurality of switches coupled to the positive input and the negative input and configured to receive input DC power having a DC voltage level from the DC voltage source;
   a first capacitor coupled to the plurality of switches and the output;
   a second capacitor coupled to the plurality of switches and the output; and
   a controller coupled to the plurality of switches and configured to operate the plurality of switches such that:

   in a first mode of operation of the DC-DC converter system, voltage across the first capacitor is at a level equal to substantially half of the DC voltage level of the input DC power;
   in a second mode of operation of the DC-DC converter system, voltage across the second capacitor is at a level equal to substantially half of the DC voltage level of the input DC power; and
   an output voltage level of the output DC power is stepped down, by a voltage step down ratio, in relation to the DC voltage level of the input DC power.

2. The DC-DC converter system of claim 1, further comprising:

   a first inductor coupled between the plurality of switches and the output; and
   a second inductor coupled between the first capacitor and the output.

3. The DC-DC converter system of claim 2, wherein the plurality of switches includes a first switch coupled between the positive input and the first capacitor, a second switch coupled between the second capacitor and the output, and a third switch coupled between the first inductor and the output.

4. The DC-DC converter system of claim 3, wherein in the first mode of operation the controller is further configured to:

   provide control signals to the first switch to close the first switch, thereby coupling the positive input to the first capacitor;
   provide control signals to the second switch to close the second switch, thereby coupling the output to the second capacitor; and
   provide control signals to the third switch to close the third switch, thereby coupling the output to the first inductor.

5. The DC-DC converter system of claim 4, wherein the plurality of switches further includes a fourth switch coupled between the negative input and the second capacitor, a fifth switch coupled between the first capacitor and the first inductor, and a sixth switch coupled between the second inductor and the output.

6. The DC-DC converter system of claim 5, wherein in the second mode of operation the controller is further configured to:

   provide control signals to the fourth switch to close the fourth switch, thereby coupling the negative input to the second capacitor;
   provide control signals to the fifth switch to close the fifth switch, thereby coupling the second capacitor to the output via the first inductor; and
   provide control signals to the sixth switch to close the sixth switch, thereby coupling the output to the second inductor.

7. The DC-DC converter system of claim 6, wherein in a third mode of operation of the DC-DC converter system, the controller is further configured to:

   provide control signals to the third switch to close the third switch, thereby coupling the output to the first inductor; and
   provide control signals to the sixth switch to close the sixth switch, thereby coupling the output to the second inductor,

wherein the controller is further configured to operate the DC-DC converter system in the third mode of operation when the DC-DC converter system is transitioning between the first and second modes of operation.

8. The DC-DC converter system of claim 7, wherein a positive terminal of the first capacitor is coupled to the first switch and a negative terminal of the first capacitor is coupled to the second inductor.

9. The DC-DC converter system of claim 8, wherein a positive terminal of the second capacitor is coupled to the negative terminal of the first capacitor and a negative terminal of the second capacitor is coupled to the fourth switch.

10. A method for operating a DC-DC converter system, the method comprising:

receiving, with a plurality of switches, input DC power having a DC voltage level, from a DC voltage source;
operating, with a controller coupled to the plurality of switches, the plurality of switches in a first mode of operation such that voltage across a first capacitor coupled to the plurality of switches is at a level equal to substantially half of the DC voltage level of the input DC power;
operating, with the controller, the plurality of switches in a second mode of operation such that voltage across a second capacitor coupled to the plurality of switches is at a level equal to substantially half of the DC voltage level of the input DC power;
providing, output DC power having an output voltage level, to a load coupled to the plurality of switches; and
operating, with the controller, the plurality of switches such that the output voltage level of the output DC power is stepped down, by a voltage step down ratio, in relation to the DC voltage level of the input DC power.

11. The method of claim 10, wherein the DC-DC converter system includes a positive input configured to be coupled to a positive terminal of the DC voltage source, a negative input configured to be coupled to a negative terminal of the DC voltage source, an output configured to be coupled to a load and to provide output DC power to the load, a first inductor coupled between the plurality of switches and the output, and a second inductor coupled between the first capacitor and the output, and wherein operating the plurality of switches in the first mode of operation includes:

coupling the positive input to the output via a first power path including the first capacitor and the second inductor;
coupling the second capacitor to the output via a second power path including the second inductor; and
coupling the first inductor to the output via a third power path.

12. The method of claim 11, wherein operating the plurality of switches in the second mode of operation includes:

coupling the negative input to the output via a fourth power path including the second capacitor and the first inductor;
coupling the first capacitor to the output via a fifth power path including the first inductor; and
coupling the second inductor to the output via a sixth power path.

13. The method of claim 12, further comprising alternating operation of the plurality of switches in the first mode of operation and the second mode of operation.

14. The method of claim 13, further comprising operating the plurality of switches in a third mode of operation when operation of the plurality of switches is transitioning between the first and second modes of operation, wherein operating the plurality of switches in the third mode of operation includes:

coupling the first inductor to the output via the third power path; and
coupling the second inductor to the output via the sixth power path.

15. The method of claim 10, wherein receiving the input DC power from the DC voltage source includes receiving the input DC power from a front end Power Factor Correction (PFC) pre-regulator that utilizes simple diode rectifiers to generate the input DC power.

FIG. 1

FIG. 2

FIG. 3

EP 3 282 570 A1

FIG. 4

EP 3 282 570 A1

FIG. 5

Europäisches
Patentamt

European
Patent Office

Office européen
des brevets

## EUROPEAN SEARCH REPORT

Application Number

EP 17 18 4166

### DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| X | US 2015/097546 A1 (PAN CHING-TSAI [TW] ET AL) 9 April 2015 (2015-04-09) <br> * paragraphs [0027] - [0034] * <br> * figures 1,4(a),4(b),4(c),5 * <br> ----- | 1-15 | INV. <br> H02M3/07 <br> H02M3/158 <br><br> ADD. <br> H02M1/00 |
| | | | **TECHNICAL FIELDS SEARCHED      (IPC)** <br><br> H02M |

The present search report has been drawn up for all claims

| Place of search | Date of completion of the search | Examiner |
|---|---|---|
| The Hague | 20 December 2017 | Standaert, Frans |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                 
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 18 4166

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2017

| Patent document cited in search report | Publication date | Patent family member(s) | Publication date |
|---|---|---|---|
| US 2015097546 A1 | 09-04-2015 | TW 201515374 A<br>US 2015097546 A1 | 16-04-2015<br>09-04-2015 |

EPO FORM P0459

For more details about this annex : see Official Journal of the European Patent Office, No. 12/82